# EUROPÄISCHE PATENTSCHRIFT

(11) **EP 0 655 893 B1**
(45) Veröffentlichungstag und Bekanntmachung des Hinweises auf die Patenterteilung: **05.03.1997**
(21) Anmeldenummer: 94908178.0
(22) Anmeldetag: 13.08.1993
(51) Int. Cl.: A47J 45/07, A47J 45/06, F16B 21/02

(54) **BEFESTIGUNGSVORRICHTUNG FÜR EIN GRIFFELEMENT EINES GAR- ODER SERVIERGESCHIRRS**
FASTENING DEVICE FOR THE HANDLE ELEMENT OF COOKING OR SERVING CROCKERY
DISPOSITIF DE FIXATION DE L'ELEMENT FORMANT POIGNEE D'UNE PIECE DE VAISSELLE OU D'UN RECIPIENT DE CUISINE

(30) Priorität: 18.08.1992 DE 9211060 U
(43) Veröffentlichungstag der Anmeldung: 07.06.1995
(73) Patentinhaber: SYNKRONA AG, CH-6370 Stans (CH); SCHULTZ, Horst, D-65239 Hochheim (DE)
(72) Erfinder: SCHULTZ, Horst, D-65239 Hochheim (DE)
(74) Vertreter: Blumbach, Kramer & Partner
(86) Internationale Anmeldenummer: EP9302155
(87) Internationale Veröffentlichungsnummer: WO9404062

(56) Entgegenhaltungen:
- CH-A- 625 691
- DE-A- 3 214 533
- GB-A- N26 554
- US-A- 3 278 074

## Beschreibung

Die Erfindung betrifft eine Befestigungsvorrichtung zur lösbaren Befestigung eines Griffelements an einem Gar- oder Serviergeschirr nach dem Oberbegriff des Anspruchs 1.

Derartige Befestigungsvorrichtungen sind seit langem bekannt und dienen u.a. dazu, die Gar- oder Serviergeschirre oder Teile von diesen besser stapelbar zu machen oder deren Reinigung zu erleichtern.

Hierbei soll sowohl die Befestigung des Griffteils als auch dessen Abnahme leicht möglich sein. Einfache Befestigungsformen, wie z.B. Schraubverbindungen, haben sich zwar als dauerhaft und stabil erwiesen, sind jedoch anfällig gegen Verschmutzung der Gewindegänge und weisen z.T. im gelösten Zustand vorstehende scharfkantige Gewindebereiche auf. Die Verwendung von seitlich angeordneten, verdeckten Madenschrauben, die eine Klemm- oder Keilwirkung auf ein Halteorgan des Gar- oder Serviergeschirrs ausüben, reduziert zwar die Verschmutzungsanfälligkeit und die Gefährdung durch scharfkantige Gewindeteile, jedoch ist das Griffteil in der Regel nur mit zusätzlichem Werkzeug zu befestigen oder zu lösen. Generell sind Schraubverbindungen für die nötige Stabilität mit mehreren Gewindegängen ausgestattet, so daß bei der Befestigung oder dem Lösen mehrere Drehungen vorgenommen werden müssen, zusätzlich muß ein verkantetes Anbringen vermieden werden, um Beschädigungen zu vermeiden.

Einfacher handhabbar sind Bajonettverbindungen, die in der Regel keine anfällige Gewindeteile aufweisen. Eine Bajonettverbindung zum Befestigen eines Griffs an einem Deckel mit einer kreisförmigen Öffnung wird durch die GB-A-26554 offenbart. Aus der AT-A-387 708 ist ein Handgriff bekannt, der in einer kompliziert geformten öffnung eines Deckels dadurch gehalten ist, daß seitlich hervorstehende Enden eines Arretierstiftes einen Teil der Deckelfläche hintergreifen. In beiden Fällen ist im befestigten Zustand das Halteorgan des Handgriffs den Ausdünstungen bei der Zubereitung der Speisen ausgesetzt. Hierdurch können Verschmutzungen und eventuell sogar hartnäckige Verkrustungen im Befestigungsbereich nicht umgangen werden, und es wird sowohl die Handhabbarkeit durch erhöhten Aufwand beim Reinigen verschlechtert als auch das sichere Befestigen und Lösen gefährdet.

Der Erfindung liegt demgemäß die Aufgabe zugrunde, bei einer Befestigungsvorrichtung nach dem Oberbegriff des Anspruchs 1 die Handhabbarkeit zu verbessern und die Funktionssicherheit zu erhöhen.

Die Losung der Aufgabe ist im Anspruch 1 gekennzeichnet.

Durch Anordnung der Halteorgane an der Außenseite des Gar- oder Serviergeschirrs wird ein Hineinragen in das Gar- oder Serviergeschirr vermieden und derart die Anfälligkeit gegenüber Verschmutzungen reduziert. Kompliziert herzustellende Öffnungen sind unnötig.

Zusätzlich kann das an der Außenseite des Gar- oder Serviergeschirrs angebrachte Halteorgan auch allein als Griff dienen, selbst im erhitzten Zustand sind die Temperaturen an der Außenseite des Gar- oder Serviergeschirrs weitaus niedriger als die für die Zubereitung der Speisen benötigten Temperaturen. Somit kann das Gar- oder Serviergeschirr mit einem an diesem angeordneten Halteorgan direkt gehalten werden.

Der Haltbereich zur Befestigung des Halteorgans des Griffelementes kann bei abgenommenem Griffelement als Stellfläche für das umgedrehte Gar- oder Serviergeschirr genutzt werden, hierdurch wird z.B. ein kuppelförmiger Deckel im umgedrehten Zustand als Schale oder Schüssel nutzbar. Auch das beschädigungsfreie Stapeln oder Verpacken mehrerer Gar- oder Serviergeschirre in engem Kontakt wird durch diesen Haltebereich vorteilhaft unterstützt.

Ein sehr preisgünstiges und stabiles Halteorgan des Gar- oder Serviergeschirrs besteht aus einem im wesentlichen bogenförmigen Drahtbiegeteil. Zu einer sich selbst zentrierenden Befestigung mit dem Griffelement kommt es, wenn der Haltebereich des zweiten Halteorgans auf der Innenflanke des Drahtbiegeteils angeordnet ist und ein seitlicher Fortsatz des an dem Griffelement ausgebildeten Halteorgans nach außen gerichtet ist und eine im wesentlichen ebene Anlagefläche und eine zu dieser Anlagefläche schräge Flanke aufweist. Eine taumelfreie Befestigung ist gewährleistet, wenn das erste Halteorgan drei seitliche Fortsätze aufweist und das Drahtbiegeteil drei entsprechende Bögen mit den jeweiligen Haltebereichen enthält. Bilden die drei seitlichen, nach außen gerichteten Fortsätze mit ihrer im wesentlichen ebene Anlagefläche zusammen die Grundfläche eines gleichschenklichen Dreiecks und sind die drei Bögen des Halteorgans auf den Seiten eines gleichseitigen Dreiecks angeordnet, das etwas größer als die Grundfläche der ebenen Anlagefläche ist, ergibt sich daraus eine Führung für das korrekte Ineinandergreifen der Halteorgane und die exakte Befestigung wird auch bei flüchtiger Handhabung sicher gewährleistet. Die drei Bögen des Halteorgans bilden im umgedrehten Zustand des Gar- oder Serviergeschirrs eine sichere Dreipunktauflage.

Das Abkühlverhalten und die Handhabbarkeit des Halteorgans des Gar- oder Serviergeschirrs ist verbessert, wenn dessen Abstand zum Gar- oder Serviergeschirr oder dessen Größe zunimmt. Dies kann z.B. mit zwei etwa parallel zueinander angeordneten, U-förmige Abschnitte aufweisenden Drahtbiegeteilen erreicht werden, die sich in einem ersten Bereich im wesentlichen senkrecht vom Gar- oder Serviergeschirr weg erstrecken und jeweils in einem sich daran anschließenden zweiten Bereich nach einer Biegung zur Seite hin sich im wesentlichen parallel zur Oberfläche des Gar- oder Serviergeschirrs erstrecken. Dabei weist das Halteorgan des Griffelementes wenigstens einen nach innen gerichteten seitlichen Fortsatz auf. Vier Fortsätze erlauben die sichere Befestigung schon bei einer 45°-Drehung des Griffelements. Die Herstellung des am Gar- oder Serviergeschirr angebrachten Halteorgans aus einem im wesentlichen topfförmigen Ziehformteil ist kostengünstig, drei daran angeordnete seitliche Erweiterungen tragen zur Stabilität des darauf in umgedrehtem Zustand abgestellten Gar- oder Serviergeschirrs bei.

Durch einen am Griffelement angebrachten, im Querschnitt trichterförmigen Griffschutz wird die Benutzersicherheit erhöht. Weist dieser Griffschutz an seinem unterem Rand eine kreisförmige Anlagefläche auf, trägt dies zur spielfreien Befestigung des Griffelementes mit bei.

Sind im Griffelement, vorzugsweise im Bereich seiner Mittellängsachse, eine oder mehrere Ausnehmungen angeordnet, so können in diesen Funktionselementen entnehmbar oder dauerhaft befestigt untergebracht werden. Als Funktionselemente sind u.a. ein Garthermometer, ein Hygrometer, eine Kondensationsvorrichtung, ein Flüssigkeitsreservoir, ein Überdruck- oder Druckregelventll verwendbar.

Durch Anordnung einer Öffnung innerhalb der durch das Halteorgan umschlossenen Fläche im Gar- oder Serviergeschirr wird die Verwendung von Funktionselementen, insbesondere von Garthermometern, ermöglicht, die sich zumindest mit einem Teil ihrer Meßfläche durch diese Öffnung in den Innenraum des Gar- oder Serviergeschirrs erstrecken. Hierbei ist eine schnellere und genauere Messung der Verhältnisse im Innenraum des Gar- oder Serviergeschirrs möglich.

Durch Schrägen, die an den seitlichen Fortsätzen des Halteorgans des Griffelementes und/oder des Haltebereichs des Halteorgans des Gar- oder Serviergeschirrs angebracht sind, wird bei einer zunehmenden Verdrehung des Griffelementes relativ zu dem Gar- oder Serviergeschirr der Kraftschluß, vorzugsweise mit durch Rastelemente oder Vertiefungen erzeugten definierten Raststellungen, erhöht und die Sicherheit verbessert.

Die Erfindung wird nachstehend anhand der Ausführungsbeispiele im einzelnen beschrieben. Es zeigen:
- Fig. 1: einen senkrechten Querschnitt durch ein an einem Gar- oder Serviergeschirr befestigtes Griffelement einer ersten Ausführungsform;
- Fig. 2: einen waagerechten Querschnitt durch ein an einem Gar- oder Serviergeschirr befestigtes Griffelement der ersten Ausführungsform;
- Fig. 3: eine Aufsicht auf das Halteorgan des Gar- oder Serviergeschirrs der ersten Ausführungsform;
- Fig. 4: eine Seitenansicht des Halteorgans des Gar- oder Serviergeschirrs der ersten Ausführungsform;
- Fig. 5: einen senkrechten Querschnitt durch ein an dem Gar- oder Serviergeschirr befestigtes Griffelement mit einem darin angeordneten Garthermometer;
- Fig. 6: einen senkrechten Querschnitt durch ein an einem Gar- oder Serviergeschirr befestigtes Griffelement einer zweiten Ausführungsform,
- Fig. 7: einen waagerechten Querschnitt durch ein an einem Gar- oder Serviergeschirr befestigtes Griffelement eines zweiten Ausführungsbeispiels;
- Fig. 8: eine perspektivische Darstellung des Halteorgans des Gar- oder Serviergeschirrs der zweiten Ausführungsform;
- Fig. 9: einen senkrechten Querschnitt durch ein an einem Gar- oder Serviergeschirr befestigtes Griffelement einer dritten Ausführungsform und
- Fig. 10: einen waagerechten Querschnitt durch ein an einem Gar- oder Serviergeschirr befestigtes Griffelement einer dritten Ausführungsform.

Die Erfindung wird nachstehend anhand der Ausführungsbeispiele beschrieben. Das Griffelement 1 weist bei einer ersten Ausführungsform drei seitliche Fortsätze 2,3,4 auf, die sich vom zentralen, im wesentlichen zylindrischen Mittelteil des Griffelements 1 nach außen erstrecken. Diese seitlichen Fortsätze 2,3,4 durchtreten im befestigten Zustand des Griffelements 1 bogenförmige Abschnitte 5,6,7 eines Drahtbiegeteils 8, das am Gar- oder Serviergeschirr 9 mit jeweils zwischen den bogenförmigen Abschnitten ausgebildeten geraden Bereichen befestigt ist.

Das Drahtbiegeteil 8 bildet das Halteorgan des Gar- oder Serviergeschirrs. Die bogenförmigen Abschnitte 5,6,7 bilden den Haltebereich für eine schräge Flanke 10, die jeweils an den seitlichen, nach außen gerichteten Fortsätzen 3,4,5 angeordnet ist und einer im wesentlichen ebenen Anlagefläche 11 gegenüberliegt.

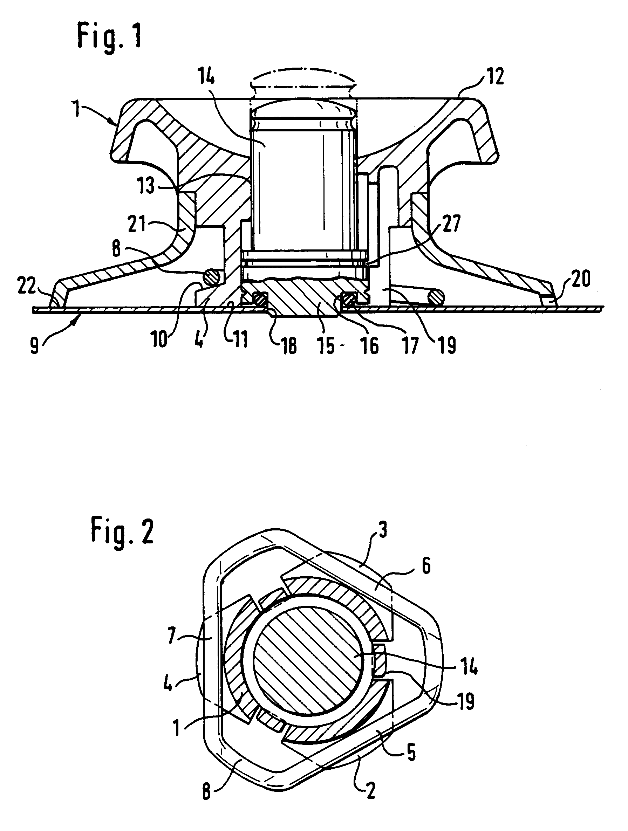

Im befestigten Zustand ergibt sich durch die schräge Flanke 10 und die ebene Anlagefläche 11 zwischen der Oberfläche des Gar- oder Serviergeschirrs 9 und den bogenförmigen Abschnitten 5,6,7 des Drahtbiegeteils eine Keilwirkung, die das Griffelement 1 mit zunehmender Verdrehung in kraftschlüssigeren Eingriff bringt. Durch den bogenförmigen Verlauf bzw. die schrägen Flächen der Abschnitte 5,6,7 ist die auf die seitlichen Fortsätze 3,4,5 ausgeübte Haltekraft der Haltebereiche festgelegt. Der Kraftschluß nimmt hierbei bis zu der in Fig. 2 dargestellten Stellung progressiv zu und nach dem Weiterdrehen über diese Position wieder monoton ab. Alternativ enthalten die bogenförmigen Abschnitte 5,6,7 oder die seitlichen Fortsätze 2,3,4 Vertiefungen oder Erhöhungen, die in den Figuren nicht dargestellt sind, welche zu definierten Raststellungen mit festgelegten Kräften führen. Das Griffelement 1 weist auf der dem Halteorgan gegenüberliegenden Seite eine im wesentlichen plane ringförmige Fläche 12 auf, auf welcher das Gar- oder Serviergeschirr 9 mit befestigtem Griffelement 1 sicher abstellbar ist.

Im Bereich der Mittellängsachse des Griffelements 1 ist eine zentrale Ausnehmung 13 in Form einer axialen Durchgangsbohrung angeordnet. Im ersten Ausführungsbeispiel ist in dieser zentralen Durchgangsbohrung ein im wesentlichen zylindrisches Verschlußelement 14 beherbergt, dessen stempelförmiges Unterteil 15 in seinem Randbereich eine Ringnut 16 aufweist. In der Ringnut 16 ist ein Dichtelement 17, z.B. ein O-Ring, angeordnet. Mit einem mittig angeordneten, zylindrisch hervorstehenden Abschnitt durchtritt das stempelförmige Unterteil 15 bei dichtender Anlage des Dichtelementes 17 eine Öffnung 18 im Gar- oder Serviergeschirr 9. Der Verschiebeweg des Verschlußelementes 14 ist durch einen Anschlag begrenzt, der durch eine Verjüngung der zentralen Ausnehmung 13 sowie eine obere Randfläche des stempelförmigen Unterteils 15 gebildet wird. In nach oben verschobener Stellung des Verschlußelementes 14 kommuniziert der Innenraum des Gar- oder Serviergeschirrs 9 mit dem Außenraum durch eine Auslaßöffnung 19, die seitlich von der zentralen Ausnehmung 13 nach außen führt, und durch eine Auslaßöffnung 20, die in dem trichterförmigen, koaxial angeordneten Griffschutz 21 im Bereich der unteren Anlagefläche 22 angeordnet ist.

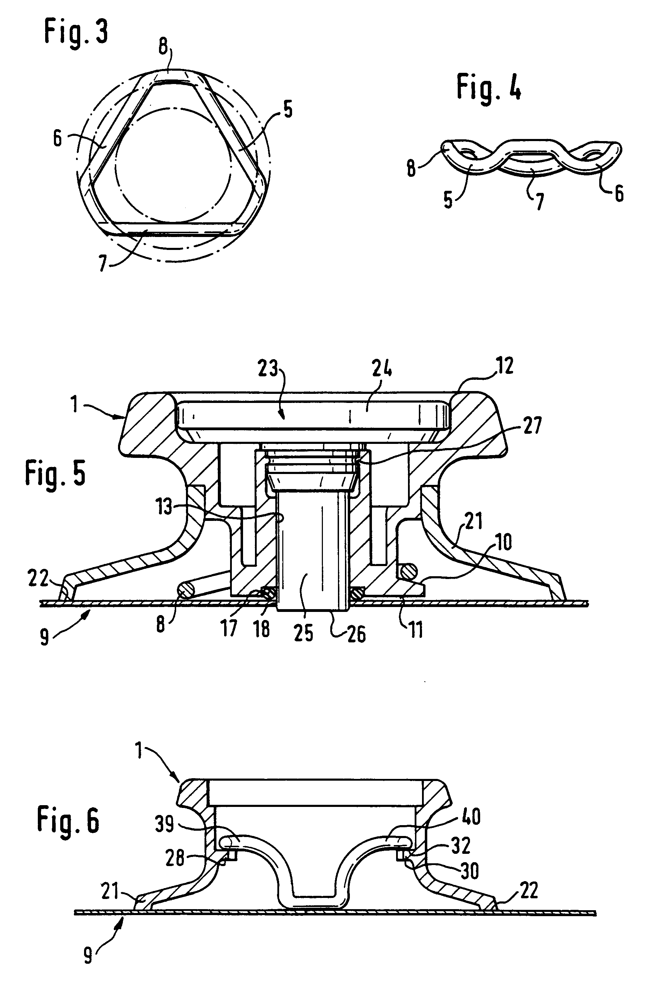

Das Verschlußelement 14 ist ein dauerhaft befestigtes Funktionselement, jedoch kann alternativ auch die Anbringung eines wieder entnehmbaren Funktionselementes vorgesehen sein. Ein derartiges Funktionselement ist in Fig. 5 dargestellt, in welcher ein Garthermometer 23 in koaxialer Anordnung in der zentralen Ausnehmung 13 angeordnet gezeigt ist. Das Garthermometer 23 weist einen oberen im wesentlichen scheibenförmigen Abschnitt 24 und einen unteren, im wesentlichen zylindrischen Abschnitt 25 auf. Der untere Abschnitt 25 erstreckt sich z. T. durch die Öffnung 18 im Gar- oder Serviergeschirr 9, so daß die untere Meßfläche 26 des Garthermometers 23 in den Innenraum des Gar- oder Serviergeschirrs 9 hineinragt.

In der Ausnehmung 13 sind seitlich radiale Rastnasen 27 angeordnet, die sowohl das wieder entnehmbare Garthermometer 23 als auch das Verschlußelement 14 jeweils in einer axialen Raststellung längsverschieblich eingerastet halten.

Der untere Abschnitt 25 ist zur Seite hin von einem Dichtelement 17 umgeben abgedichtet, das zu einer in der Anlagefläche 11 des Griffelements 1 ausgebildeten Ringnut und zur Außenfläche des Gar- oder Serviergeschirrs 9 dichtend anliegt. In diesem Ausführungsbeispiel sind weder in der Anlagefläche 11 noch in der Anlagefläche 22 des Griffschutzes 21 seitliche Auslaßöffnungen angeordnet. Der Kraftschluß findet im befestigten Zustand zwischen der schrägen Flanke 10 des seitlichen Fortsatzes und einem bogenförmigen Abschnitt des Drahtbiegeteils 8 sowie zwischen der Außenfläche des Gar- oder Serviergeschirrs 9 und der Anlagefläche 22 des Griffschutzes 21 statt. Die ebene Anlagefläche 11 weist keinen mechanischen Kontakt zur Oberfläche des Gar- oder Serviergeschirrs 9 auf, die Wärmeleitung zwischen dem Gar- oder Serviergeschirr und dem Griffelement 1 ist somit durch einen Luftspalt und das Dichtelement 17 unterbrochen, wodurch weiteres Aufheizen des Elements 1 vermieden ist.

In einer zweiten Ausführungsform, die in den Fig. 6, 7 und 8 dargestellt ist, weist das Griffelement 1 als Halteorgan vier nach innen gerichtete seitliche Fortsätze 28,29,30,31 auf, die sich an der zylindrischen Innenwand in einer Ebene erstrecken, die parallel zu der Ebene liegt, die durch die Anlagefläche 22 des Griffschutzes 21 gebildet wird. Die seitlichen Fortsätze 28,29,30,31 haben jeweils ebene Anlageflächen 32,33,34,35, die alternativ eine Schräge aufweisen können, um somit den Kraftschluß in Abhängigkeit von der Verdrehung des Griffelements 1 definiert zu verändern.

Das Halteorgan des Gar- oder Serviergeschirrs besteht aus einem Drahtbiegeteil 36, das zwei parallel zueinander angeordnete und im oberen Bereich nach außen abgebogene U-förmige Abschnitte aufweist. Diese U-förmigen Abschnitte erstrecken sich in einem ersten Bereich 37 senkrecht vom Gar- oder Serviergeschirr 9 weg und gehen jeweils in einen zweiten Bereich 39,40 über, der im wesentlichen parallel zur Oberfläche des Gar- oder Serviergeschirrs 9 verläuft. Mit dem zweiten Bereich 39,40, der den Haltebereich bildet, steht das Halteorgan des Gar- oder Serviergeschirrs 9 im befestigten Zustand des Griffelementes 1 in kraftschlüssigem Kontakt mit jeweils einer der Anlageflächen 32,33,34,35 des Griffelementes 1. Hierdurch steht ebenfalls die ringförmige Anlagefläche 22 des Griffschutzes 21 in kraftschlüssiger Anlage mit der Außenseite des Gar- oder Serviergeschirrs 9. Durch eine Verdrehung des Griffelementes 1 um jeweils 45° kann diese kraftschlüssige Verbindung hergestellt oder gelöst werden.

Die genauere Ausgestaltung des zentralen Bereiches des Griffelementes 1 ist in den Fig. 6, 7 und 8 für das zweite Ausführungsbeispiel weggelassen, hierfür sind ebenfalls die bei dem ersten Ausführungsbeispiel geschilderten Funktionselemente in der bereits beschriebenen Weise einsetzbar.

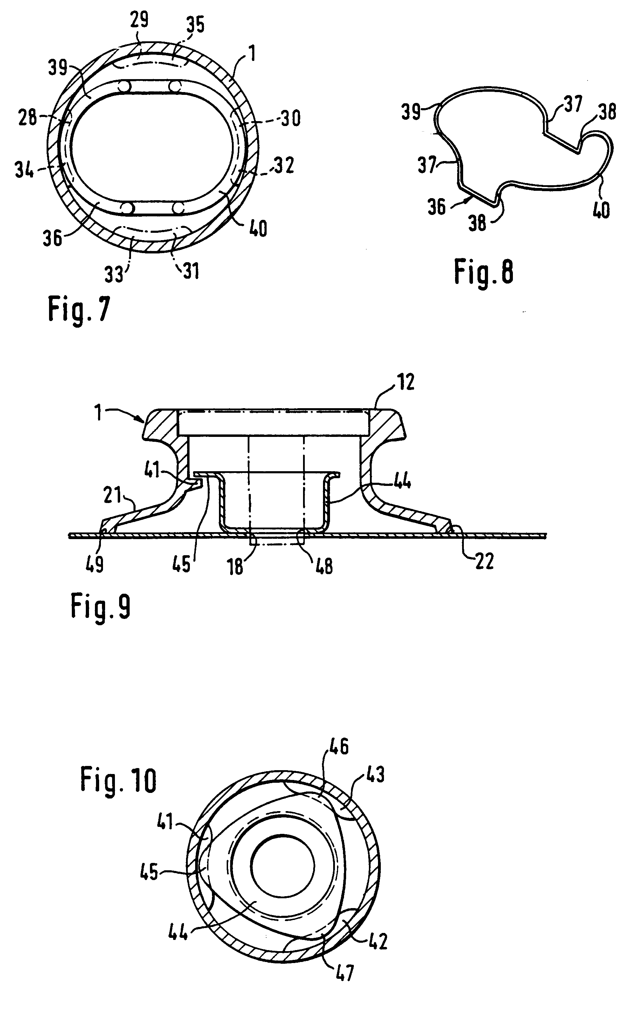

Ein drittes Ausführungsbeispiel der Erfindung ist in den Fig. 9 und 10 dargestellt, in welchen das Griffelement 1 im wesentlichen mit dem in den Fig. 6 und 7 dargestellten Griffelement übereinstimmt, mit der Ausnahme, daß drei symmetrisch auf den Kreisumfang verteilte seitliche Fortsätze 41,42,43 als Halteorgane vorgesehen sind. Das Halteorgan des Gar- oder Serviergeschirrs 9 besteht aus einem im wesentlichen topfförmigen Ziehformteil 44, an dessen oberem Rand drei seitliche radiale Erweiterungen 45,46,47 angebracht sind. Die seitlichen Erweiterungen 45,46,47 bilden mit ihrer Unterseite den Haltebereich des Halteorgans, der jeweils bei Befestigung des Elements 1 in kraftschlüssigen Eingriff mit der Anlagefläche der seitlichen Erweiterungen 45,46,47 gerät. Hierbei kommt es wie beim zweiten Ausführungsbeispiel ebenfalls zu einem mechanischen Kontakt zwischen der Anlagefläche 22 des Griffschutzes 21 mit der Außenseite des Gar- oder Serviergeschirrs 9.

Alternativ ist die Anlagefläche 22 bei den beschriebenen Ausführungsbeispielen mit einer weiteren, in den Figuren nicht dargestellten Dichtlippe 49 versehen, die im befestigten Zustand des Griffelementes 1 einen gas- und/oder flüssigkeitsdichten Abschluß zwischen der Außenseite des Griffschutzes 21 und dessen Innenseite herstellt.

Auch die seitlichen Erweiterungen 45,46,47 geben in gleicher Weise wie die sich seitlich erstreckenden zweiten Bereiche 39,40 dem Gar- oder Serviergeschirr 9 in umgedreht aufgestellter Weise einen sicheren Stand.

Innerhalb des Zentrums des Ziehformteils 44 ist eine zentrale Öffnung 48 koaxial zur Öffnung 18 angeordnet, wobei die Öffnung 48 in etwa dieselbe Form wie die Öffnung 18 aufweist.

In den Fig. 9 und 10 ist der zentrale Bereich des Griffelements 1 nicht dargestellt, auch hierbei sind die in Fig. 1, 2 und 5 dargestellten Funktionselemente in gleicher Weise einsetzbar.

## Patentansprüche

1. Befestigungsvorrichtung zur lösbaren Befestigung eines Griffelements an einem Gar- oder Serviergeschirr mit jeweils an dem Griffelement und dem Gar- oder Serviergeschirr angebrachten Halteorganen, die zur Befestigung in wechselseitigen, kraftschlüssigen Eingriff bringbar sind, wobei das erste, an dem Griffelement (1) ausgebildete Halteorgan wenigstens einen seitlichen Fortsatz (2, 3, 4; 28, 29, 30, 31) aufweist, der im befestigten Zustand des Griffelements (1) nicht in den Innenraum des Gar- oder Serviergeschirrs (9) ragt und das zweite, an der Außenseite des Gar- oder Serviergeschirrs (9) angebrachte Halteorgan einen Haltebereich (5, 6, 7; 39, 40) aufweist, wobei durch eine Verdrehung um weniger als 360° der seitliche Fortsatz (2, 3, 4; 28, 29, 30, 31) mit dem Haltebereich (5, 6, 7; 39, 40) in kraftschlüssigen Eingriff bringbar ist und der Haltebereich (5, 6, 7) des zweiten Halteorgans auf der Innenflanke eines teilweise bogenförmigen Drahtbiegeteils (8) ausgebildet ist.

2. Befestigungsvorrichtung nach Anspruch 1,
dadurch gekennzeichnet,
daß jeder seitliche Fortsatz (2, 3, 4) des ersten, an dem Griffelement (1) ausgebildeten Halteorgans nach außen gerichtet ist und eine im wesentlichen ebene Anlagefläche (11) und eine zu dieser Anlagefläche schräge Flanke (10) aufweist.

3. Befestigungsvorrichtung nach Anspruch 2,
dadurch gekennzeichnet,
daß das erste Halteorgan drei seitliche, nach außen gerichtete Fortsätze (2, 3, 4) aufweist, deren im wesentlichen ebene Anlageflächen (11) zusammen die Grundfläche eines gleichschenkligen Dreiecks mit abgeflachten Ecken bilden und daß das Drahtbiegeteil (8) des zweiten Halteorgans drei Bögen aufweist, die den Haltebereich (5, 6, 7) bilden und die in etwa auf den Seiten eines gleichseitigen Dreiecks, das etwas größer als die Grundfläche der ebenen Anlageflächen (11) ist, angeordnet sind.

4. Befestigungsvorrichtung nach Anspruch 1,
dadurch gekennzeichnet,
daß das erste Halteorgan des Griffelementes (1) wenigstens einen nach innen gerichteten seitlichen Fortsatz (28, 29, 30, 31), vorzugsweise vier Fortsätze (28, 29, 30, 31), mit einer ebenen Anlagefläche (32, 33, 34, 35) aufweist und das zweite Halteorgan aus einem Drahtbiegeteil (36) besteht, das zwei etwa parallel zueinander angeordnete U-förmige Abschnitte aufweist, die sich in einem ersten Bereich (37, 38) im wesentlichen senkrecht vom Gar- oder Serviergeschirr (9) weg erstrecken und jeweils in einem sich daran anschließenden zweiten Bereich (39, 40) nach einer Biegung zur Seite sich im wesentlichen parallel zur Oberfläche des Gar- oder Serviergeschirrs (9) erstrecken.

5. Befestigungsvorrichtung nach einem der vorstehenden Ansprüche, dadurch gekennzeichnet,
daß das Griffelement (1) einen im Querschnitt im wesentlichen trichterförmigen Griffschutz (21) aufweist, der den oder die seitlichen Fortsätze (2, 3, 4; 28, 29, 30, 31; 41, 42, 43) von außen umgibt und an seinem unteren Rand eine kreisförmige Anlagefläche (22) und/oder Dichtlippe (49) angeordnet ist.

6. Befestigungsvorrichtung nach einem der vorstehenden Ansprüche, dadurch gekennzeichnet,
daß innerhalb der durch das zweite Halteorgan umschlossenen Fläche, vorzugsweise im Zentrum dieser Fläche, eine Öffnung (18, 48) angebracht ist, die den Innenraum des Gar- oder Serviergeschirrs (9) mit dem Außenraum verbindet.

7. Befestigungsvorrichtung nach einem der vorstehenden Ansprüche, dadurch gekennzeichnet,
daß im Bereich der Mittellängsachse, innerhalb des Griffelements (1) eine oder mehrere Ausnehmungen (13) angeordnet sind, in welcher oder in welchen Funktionselemente (14, 23) entnehmbar oder dauerhaft befestigt angeordnet sind und in der ebenen Anlagefläche (10) und im Bereich der unteren Anlagefläche (22) des Griffschutzes (21) jeweils mindestens eine Öffnung (19, 20) vorgesehen ist.

8. Befestigungsvorrichtung nach einem der vorstehenden Ansprüche, dadurch gekennzeichnet,
daß ein in der Ausnehmung (13) des am Gar- oder Serviergeschirr (9) befestigen Griffelements (1) angeordnetes Funktionselement (23) sich zumindest mit einem Teil seiner Meßfläche (26) durch die Öffnung (18, 48) erstreckt.

9. Befestigungsvorrichtung nach einem der vorstehenden Ansprüche, dadurch gekennzeichnet,
daß der oder die seitlichen Fortsätze (2, 3, 4; 28, 29, 30, 31) des ersten Halteorgans und/oder der Haltebereich oder die Haltebereiche (5, 6, 7; 39, 40) des zweiten Halteorgans wenigstens eine Schräge, vorzugsweise mit Rastelementen oder Vertiefungen, aufweisen, die bei einer zunehmenden Verdrehung des Griffelementes (1) relativ zu dem Gar- oder Serviergeschirr (9) den Kraftschluß, vorzugsweise mit definierten Raststellungen, erhöhen.

## Claims

1. A fixing device for the releasable fixing of a handle element to a cooking or serving utensil comprising retaining elements disposed respectively on the handle element and on the cooking or serving utensil, said retaining elements being adapted to be brought into reciprocal frictional engagement for fixing purposes, the first retaining element formed on the handle element (1) comprising at least one lateral projection (2, 3, 4; 28, 29, 30, 31), which in the fixed state of the handle element (1) does not project into the interior of the cooking or serving utensil (9) and the second retaining element disposed on the outside of the cooking or serving utensil (9) has a retaining zone (5, 6, 7; 39, 40), wherein by rotation through less than 360° the lateral projection (2, 3, 4; 28, 29, 30, 31) is adapted to be brought into frictional engagement with the retaining zone (5, 6, 7; 39, 40) and the retaining zone (5, 6, 7) of the second retaining element is formed on the inner flank of a partially arcuate bent wire part (8).

2. A fixing device according to claim 1, characterised in that each lateral projection (2, 3, 4) of the first retaining element formed on the handle element (1) is directed outwards and has a substantially flat contact surface (11) and a flank (10) which is inclined to said contact surface.

3. A fixing device according to claim 2, characterised in that the first retaining element comprises three lateral outwardly directed projections (2, 3, 4), of which the substantially flat contact surfaces (11) together form the base surface of an equilateral triangle with flattened corners, and in that the bent wire part (8) of the second retaining element has three curves which form the retaining zone (5, 6, 7) and which are disposed substantially on the sides of an equilateral triangle which is somewhat larger than the base surface of the flat contact surfaces (11).

4. A fixing device according to claim 1, characterised in that the first retaining element of the handle element (1) comprises at least one inwardly directed lateral projection (28, 29, 30, 31), preferably four projections (28, 29, 30, 31), with a flat contact surface (32, 33, 34, 35) and the second retaining element consists of a bent wire part (36), which comprises two substantially parallel U-shaped portions which in a first zone (37, 38) extend substantially perpendicularly away from the cooking or serving utensil (9) and in an adjoining second zone (39, 40) each extend, after a bend to the side, substantially parallel to the surface of the cooking or serving utensil (9).

5. A fixing device according to any one of the preceding claims, characterised in that the handle element (1) comprises a handle protection (21) of substantially funnel-shaped cross-section, which surrounds from outside the or each lateral projection (2, 3, 4; 28, 29, 30, 31; 41, 42, 43) and a circular contact surface (22) and/or sealing lip (49) is disposed at its bottom edge.

6. A fixing device according to any one of the preceding claims, characterised in that an opening (18, 48) is disposed inside the surface enclosed by the second retaining element, preferably in the centre of said surface, said opening connecting the interior of the cooking or serving utensil (9) to the exterior.

7. A fixing device according to any one of the preceding claims, characterised in that one or more recesses (13) are disposed in the region of the central longitudinal axis and inside the handle element (1), function elements (14, 23) being disposed so as to be removably or permanently fixed in said recess or recesses, and at least one opening (19, 20) is provided respectively in the flat contact surface (10) and in the region of the bottom contact surface (22) of the handle protection (21).

8. A fixing device according to any one of the preceding claims, characterised in that a function element (23) disposed in the recess (13) of the handle element (1) fixed on the cooking or serving utensil (9) extends at least by part of its measuring surface (26) through the opening (18, 48).

9. A fixing device according to any one of the preceding claims, characterised in that the or each lateral projection (2, 3, 4; 28, 29, 30, 31) of the first retaining element and/or the retaining zone or zones (5, 6, 7; 39, 40) of the second retaining element have at least one bevel, preferably with detent elements or recesses, which on increasing turning of the handle element (1) relatively to the cooking or serving utensil (9) increase the frictional connection, preferably with defined detent positions.

## Revendications

1. Dispositif de fixation pour la fixation amovible d'un élément formant poignée d'une pièce de vaisselle pour la cuisson ou le service, comportant respectivement des organes de support qui sont placés sur l'élément formant poignée et sur la pièce de vaisselle pour la cuisson ou le service et peuvent être emboîtés mutuellement par adhérence (liaison de force) pour la fixation, le premier organe de support réalisé sur l'élément formant poignée (1) présentant au moins un prolongement (2, 3, 4 ; 28, 29, 30, 31) latéral qui, lorsque l'élément formant poignée (1) est fixé, ne dépasse pas à l'intérieur de la pièce de vaisselle pour la cuisson ou le service (9) et le second organe de support placé à l'extérieur de la pièce de vaisselle pour la cuisson ou le service (9) présentant une zone de maintien (5, 6, 7 ; 39, 40), le prolongement latéral (2, 3, 4 ; 28, 29, 30, 31) pouvant être emboîté par adhérence avec la zone de maintien (5, 6, 7 ; 39, 40) par une rotation de moins de 360° et la zone de maintien (5, 6, 7) du second organe de support étant réalisée sur le flanc intérieur d'une pièce cintrée en fil métallique (8), en partie en forme d'arc.

2. Dispositif de fixation selon la revendication 1, caractérisé en ce que chaque prolongement latéral (2, 3, 4) du premier organe de support réalisé sur l'élément formant poignée (1) est dirigé vers l'extérieur et présente une surface d'appui (11) en substance plane et un flanc (10) en biais par rapport à cette surface d'appui.

3. Dispositif de fixation selon la revendication 2, caractérisé en ce que le premier organe de support présente trois prolongements (2, 3, 4) latéraux, dirigés vers l'extérieur et dont les surfaces d'appui (11) en substance planes forment ensemble la surface de base d'un triangle équilatéral avec des angles aplatis et en ce que la partie courbée en fil métallique (8) du second organe de support présente trois arcs qui forment la zone de maintien (5, 6, 7) et sont disposés à peu près sur les côtés d'un triangle équilatéral qui est un peu plus grand que la surface de base des surfaces d'appui (11) planes.

4. Dispositif de fixation selon la revendication 1, caractérisé en ce que le premier organe de support de l'élément formant poignée (1) présente au moins un prolongement latéral (28, 29, 30, 31), dirigé vers l'intérieur, de préférence quatre prolongements (28, 29, 30, 31), avec une surface d'appui (32, 33, 34, 35) plane et en ce que le second organe de support se compose d'une pièce cintrée en fil métallique (36) qui présente deux sections en forme de U, à peu près parallèles l'une par rapport à l'autre et qui s'étendent, en substance perpendiculairement, en s'éloignant de la pièce de vaisselle pour la cuisson ou le service (9), dans une première zone (37, 38) et après une courbure sur le côté, s'étendent en substance parallèlement à la surface de la pièce de vaisselle pour la cuisson ou le service (9), respectivement dans une seconde zone (39, 40) adjacente.

5. Dispositif de fixation selon l'une quelconque des revendications précédentes, caractérisé en ce que l'élément formant poignée (1) présente une protection pour la poignée (21) dont la section transversale est en substance en forme d'entonnoir et qui entoure par l'extérieur le ou les prolongements latéraux (2, 3, 4 ; 28, 29, 30, 31 ; 41, 42, 43) et en ce que sur son bord inférieur, sont disposées une surface d'appui (22) circulaire et/ou une lèvre d'étanchéité (49).

6. Dispositif de fixation selon l'une quelconque des revendications précédentes, caractérisé en ce que, à l'intérieur de la surface entourée par le second organe de support, de préférence au centre de cette surface, est placée une ouverture (18, 48) qui relie l'intérieur de la pièce de vaisselle pour la cuisson ou le service (9) avec l'extérieur.

7. Dispositif de fixation selon l'une quelconque des revendications précédentes, caractérisé en ce que dans la zone de l'axe longitudinal médian, à l'intérieur de l'élément formant poignée (1) sont ménagés un ou plusieurs creux (13) dans lequel ou lesquels des éléments de fonction (14, 23) sont fixés de manière amovible ou permanente et en ce que dans la surface d'appui (10) plane et dans la zone de la surface d'appui (22) inférieure de la protection pour la poignée (21), il est prévu respectivement au moins une ouverture (19, 20).

8. Dispositif de fixation selon l'une quelconque des revendications précédentes, caractérisé en ce qu'un élément de fonction (23) disposé dans le creux (13) de l'élément formant poignée (1) fixé sur la pièce de vaisselle pour la cuisson ou le service (9) s'étend au moins avec une partie de sa surface de mesure (26), a travers l'ouverture (18, 48).

9. Dispositif de fixation selon l'une quelconque des revendications précédentes, caractérisé en ce que le ou les prolongements latéraux (2, 3, 4 ; 28, 29, 30, 31) du premier organe de support et/ou la zone de maintien ou les zones de maintien (5, 6, 7 ; 39, 40) du second organe de support présentent au moins un biais, de préférence avec des éléments à cran ou des encoches qui lors d'une rotation croissante de l'élément formant poignée (1) par rapport à la pièce de vaisselle pour la cuisson ou le service (9), augmentent l'adhérence, de préférence avec des positions définies d'encliquetage.
